# EUROPEAN PATENT SPECIFICATION

(11) **EP 3 789 456 B1**
(45) Date of publication and mention of the grant of the patent: **10.05.2023**
(21) Application number: 18923643.3
(22) Date of filing: 17.09.2018
(51) Int. Cl.: C08L 77/02, C08L 77/06, C08L 51/00, C08K 3/22, C08K 3/08, C08K 3/34, C08K 3/36, C08K 3/38, C08J 3/22

(54) **POLYAMIDE RESIN COMPOSITION HAVING HIGH METAL TEXTURE AND PREPARATION METHOD OF POLYAMIDE RESIN COMPOSITION**
POLYAMIDHARZZUSAMMENSETZUNG MIT HOHER METALLSTRUKTUR UND VERFAHREN ZUR HERSTELLUNG EINER POLYAMIDHARZZUSAMMENSETZUNG
COMPOSITION DE RÉSINE DE POLYAMIDE AYANT UNE TEXTURE MÉTALLIQUE ÉLEVÉE ET PROCÉDÉ DE PRÉPARATION DE COMPOSITION DE RÉSINE DE POLYAMIDE

(30) Priority: 20.06.2018 CN 201810638847
(43) Date of publication of application: 10.03.2021
(73) Proprietor: Shanghai Kumhosunny Plastics Co., Ltd, Shanghai 201107 (CN)
(72) Inventor: LIU, Xing, Shanghai 201107 (CN); JI, Deyun, Shanghai 201107 (CN); LUO, Minghua, Shanghai 201107 (CN); XIN, Minqi, Shanghai 201107 (CN)
(74) Representative: Petculescu, Ana-Maria
(86) International application number: PCT/CN2018/105917
(87) International publication number: WO 2019/242126

(56) References cited:
- CN-A- 105 348 791
- CN-A- 105 820 566
- CN-A- 105 820 566
- CN-A- 107 216 649
- CN-A- 107 353 635
- CN-A- 107 674 413
- JP-A- 2013 241 506
- US-A- 5 094 777

## Description

### Field

The present invention relates to a polyamide resin composition with a high metallic aspect and a method for preparing same, and belongs to the technical field of high polymer materials.

### Background

With an increasingly higher requirement of consumers on the appearance quality of products, an appearance design with a metallic aspect is getting increasingly more popular. Currently, mainstream metal-effect materials achieve aesthetic effects such as a metallic aspect and flickering through paint spraying or electroplating. However, processes such as paint spraying and electroplating are high in cost because they have complex procedures such as pretreatment, coating and transportation, complex in production process and low in yield, and further have a serious pollution problem, and a finished product contains coatings made of different materials, resulting in a large amount of waste of unrecyclable plastic.

Spray-free aesthetic plastic obtains aesthetic appearance with highlight, metal-like, rock-like or the like effect, by adding pigments with special effects, such as an aluminium powder, a pearl powder, a zinc-copper powder and glass sheets into a substrate resin, or by controlling a microstructure of a base material. An attractive special color effect may be achieved through one-time molding, post-processing procedures such as spraying and screen printing are avoided, and high efficiency, low cost, no environmental pollution, low energy consumption and 100% recycle are achieved. Due to the above advantages, the spray-free aesthetic plastic has become an important modification trend of current materials.

Having high strength, good abrasive resistance, high heat resistance, good chemical stability and good fluidity, a nylon material has a very wide application range in fields of automobiles, electronic appliances, home appliances, etc. With these advantages, the nylon material as the spray-free aesthetic plastic base material has a very good application prospect. But the nylon material is non-transparent due to crystallinity, a final aesthetic effect is poor after special-effect toner is simply added into the nylon material. Meanwhile, a special effect pigment having poor compatibility with a substrate is added, resulting in obvious reduction of toughness of a material. Moreover, the nylon material has common problems of high moisture absorption and high molding shrinkage. Therefore, as the spray-free aesthetic plastic, aesthetic effect implementation capacity of the nylon material needs to be enhanced, and impact resistance, the moisture absorption and the molding shrinkage of the nylon material also need to be improved. At present, no technical solution for improving the aesthetic effect of the nylon base material has been found, in particular, no technical solution report for improving the above properties at the same time has been found. The patent CN201310446502 discloses a polyamide resin composition with a metal effect, which includes a polymerization reaction procedure of a copolymer in the presence of swelling phyllosilicate, and is mainly used for improving welding strength of a product without any consideration for toughness of a material. The invention uses a mode of in-situ polymerization, control over preparation devices and processes being very complex and the cost being very high. CN201611014288 discloses a toughened nylon 66 material suitable for a spray-free electric welding mask and a method for preparing same, which improves toughness and fluidity of a common dyed nylon material without any consideration for an implementation condition of the special-effect toner in the material. The patent CN201710593044 discloses a nano polyamide composition with metal gloss and a method for preparing same, in which a self-manufactured nano polyamide master-batch is used as a reinforcing material to react with a core-shell dispersing agent with the assistance of corresponding processing agents, dispersing and reinforcing functions of nano particles are improved, surface glossiness is improved, but a metallic aspect of a final product is not considered, and a large amount of inorganic fillers may shield the metal special-effect toner. CN201611079305 uses a coupling agent and zinc stearate in cooperation to improve dispersing of a metallic pigment, but does not consider physical properties of a material. CN107216649A (CN201710369749) discloses a spraying composition comprising acrylonitrile styrene copolymer as modifier and polyamide as matrix resin. CN 10 5820 566 A (CN201610353165) discloses spray-free high-tenacity high-temperature-resistant nylon PA6T composite material The composite material is mainly prepared from, by weight, 70-90 parts of high-temperature-resistant nylon PA6T, 1-5 parts of pigment master batch, 5-30 parts of flexibilizer, 1-5 parts of compatilizer, 0.3-1.2 parts of lubricant, 0.2-0.8 part of antioxidant, 0-1.2 parts of passivator and 0.1-1 part of a nucleating agent.

### Summary

In consideration of defects in the prior art, the present invention aims to provide a polyamide aesthetic resin composition with a high metallic aspect and a method for preparing same.

The present invention is implemented through the following technical solution:
the present invention provides the polyamide resin composition with the high metallic aspect, which consists of the following components, in parts by weight:

| | |
|---|---|
| a polyamide resin: | 70-95 parts; |
| an auxiliary: | 0-5 parts; and |
| a special effect master-batch: | 5.6-50 parts; |

the special effect master-batch being composed of the following components:

| | |
|---|---|
| polymethyl methacrylate grafted maleic anhydride/styrene: | 5-30 parts; |
| special effect toner: | 0.5-18 parts; and |
| dibutyltin maleate-methyl methacrylate-sodium methacrylate copolymer (DBTM-MMA-NaMA for short): | 0.1-2 parts |

the auxiliary is selected from at least one of a heat stabilizer, an antioxidant, a weather resistance agent, a lubricant, a release agent, an anti-electrification agent and an inorganic filler, and
   the special effect toner is selected from one or more of a bismuth oxychloride crystal metallic pigment, a mica coating metallic pigment, a silicon dioxide coating metallic pigment, an aluminium borate coating metallic pigment, an artificial mica coating metallic pigment, an aluminium oxide coating metallic pigment, a bismuth oxide coating metallic pigment, an aluminium powder, a copper powder, an iron powder, a zinc powder and a copper-zinc powder.

As a preferred solution, the polyamide includes at least one of PA6, PA66, PA46, PA610, PA68, PAMXD6, PA10, PA12, PA11, PA6T, PA10T, PA1010, PA1212, and PA9T.

As a preferred solution, a weight-average molecular weight of the polymethyl methacrylate grafted maleic anhydride/styrene (PMMA-g-MAH/St for short) is 40,000-140,000, a content of maleic anhydride being 0.05-1 wt%.

As a preferred solution, a particle size of the special effect toner is 1-200 µm.

As a preferred solution, a weight-average molecular weight of the dibutyltin maleate-methyl methacrylate-sodium methacrylate copolymer is 1,000-40,000, a content of dibutyltin maleate being 0.5-2 wt%, and a content of sodium methacrylate being 2-15 wt%.

The present invention further provides a method for preparing the aforementioned polyamide resin composition with the high metallic aspect, which includes the following steps:
premixing polymethyl methacrylate grafted maleic anhydride/styrene and DBTM-MMA-NaMA, and then extruding same by means of a double-screw extruder, so as to obtain a melt, adding special effect toner into the melt and extruding same, so as to obtain a special effect toner master-batch, wherein an extruder temperature is 190-250°C, a length-diameter ratio of a screw is 40-60, and a rotating speed of the screw is 400-600 r/min; and
premixing a polyamide resin and an auxiliary in a high-speed mixing machine for 3-10 min, extruding same by means of the double-screw extruder, so as to obtain a melt, meanwhile, adding the special effect master-batch into the melt in a side-feed manner, and extruding same, wherein the extruder temperature is 190-290°C, the length-diameter ratio of the screw is 40-60, and the rotating speed of the screw is 400-600 r/min.

Compared with the prior art, the present invention has the following beneficial effects:
1. the blended PMMA-g-MAH/St may improve water absorption and scratch resistance of the polyamide resin;
2. the additive DBTM-MMA-NaMA has very good compatibility with a copolymer of the special effect toner and the PMMA-g-MAH/St, and is adsorbed onto a surface of the toner to assist the special effect toner to be uniformly dispersed in the PMMA-g-MAH/St, so as to avoid mutual stacking of the special effect toner;
3. active functional groups of the PMMA-g-MAH/St and the DBTM-MMA-NaMA are in mutual cooperation to assist the PMMA-g-MAH/St to be dispersed, control forms of two phases, accelerate crystallization, and refine crystal grains, so as to improve toughness, rigidity and a special effect implementation condition of a material; and
   the special effect toner master-batch is added into the melt in a side-feed manner, thereby relieving abrasion of an effect pigment, and better solving a problem of a low metallic aspect and poor toughness during preparation of a nylon material with a metal effect in the prior art.

### Detailed description of the embodiments

The present invention is described in detail with reference to the particular examples below. The following particular examples will be conducive to further understanding by those skilled in the art on the present invention, but is not intended to limit the present invention in any forms.

### Examples 1-8 and comparative examples 1-10

The examples 1-5 are all prepared by means of the following process: polymethyl methacrylate grafted maleic anhydride/styrene and an additive are added and premixed according to a proportion, and then extruded by means of a double-screw extruder, meanwhile, special effect toner is added into a melt in a side-feed manner according to a proportion, and then same is extruded, so as to obtain a special effect toner master-batch, wherein an extruder temperature is 190-250°C, a length-diameter ratio of a screw is 40-60, and a rotating speed of the screw is 400-600 r/min. Then, the remaining raw materials other than the special effect toner master-batch are premixed in a high-speed mixing machine for 3-10 min, then a premix is extruded by means of the double-screw extruder, meanwhile, the special effect toner is pretreated and added into a melt in a side-feed manner according to a proportion, and then same is extruded, wherein the extruder temperature is 190-290°C, the length-diameter ratio of the screw is 40-60, and the rotating speed of the screw is 400-600 r/min.

The examples 6-8 are all prepared by means of the following process: polymethyl methacrylate grafted maleic anhydride/styrene and an additive are added and premixed according to a proportion, and then extruded by means of a double-screw extruder, meanwhile, special effect toner is added into a melt in a side-feed manner according to a proportion, and same is extruded, so as to obtain a special effect toner master-batch, wherein an extruder temperature is 190-250°C, a length-diameter ratio of a screw is 40-60, and a rotating speed of the screw is 400-600 r/min. Then, the remaining raw materials other than the special effect toner master-batch are premixed in a high-speed mixing machine for 3-10 min, then a premix is extruded by means of the double-screw extruder, meanwhile, the special effect toner is pretreated and added into a melt in a side-feed manner according to a proportion, and then same is extruded, wherein the extruder temperature is 190-290°C, the length-diameter ratio of the screw is 40-60, and the rotating speed of the screw is 400-600 r/min.

Specific components of the examples 1-8 are described as follows.

### Example 1

70 phr of PA, 18 phr of special effect toner, 30 phr of polymethyl methacrylate grafted maleic anhydride/styrene, and 2 phr of DBTM-MMA-NaMA The PA is PA6 with an intrinsic viscosity being 2.8; the special effect toner is an aluminium powder with a mean particle size being 10 µm; Mw of the PMMA-g-MAH/St is 140,000, a content of MAH being 1 wt%; and Mw of the DBTM-MMA-NaMA is 40,000, a content of DBTM being 2 wt%, and a content of NaMA being 15 wt%.

### Example 2

95 phr of PA, 0.5 phr of special effect toner, 5 phr of polymethyl methacrylate grafted maleic anhydride/styrene, and 0.1 phr of DBTM-MMA-NaMA The PA is PA6 with an intrinsic viscosity being 2.8; the special effect toner is an aluminium powder with a mean particle size 10 µm; Mw of the PMMA-g-MAH/St is 40,000, a content of MAH being 0.05 wt%; and Mw of the DBTM-MMA-NaMA is 1,000, a content of DBTM being 0.5 wt%, and a content of NaMA being 2 wt%.

### Example 3

70 phr of PA, 18 phr of special effect toner, 30 phr of polymethyl methacrylate grafted maleic anhydride/styrene, and 2 phr of DBTM-MMA-NaMA The PA is PA6 with an intrinsic viscosity being 2.8; the special effect toner is a silicon dioxide coating metallic pigment with a mean particle size being 100 µm; Mw of the PMMA-g-MAH/St is 140,000, a content of MAH being 1 wt%; and Mw of the DBTM-MMA-NaMA is 40,000, a content of DBTM being 2 wt%, and a content of NaMA being 15 wt%.

### Example 4

70 phr of PA, 18 phr of special effect toner, 30 phr of polymethyl methacrylate grafted maleic anhydride/styrene, and 2 phr of DBTM-MMA-NaMA The PA is PA6 with an intrinsic viscosity being 2.8; the special effect toner is 9 phr of a zinc-copper powder with a mean particle size 50 µm and 9 phr of an aluminium borate coating metallic pigment with a mean particle size 200 µm; Mw of the PMMA-g-MAH/St is 140,000, a content of MAH being 1 wt%; and Mw of the DBTM- MMA-NaMA is 40,000, a content of DBTM being 2 wt%, and a content of NaMA being 15 wt%.

### Example 5

70 phr of PA, 3 phr of special effect toner, 30 phr of polymethyl methacrylate grafted maleic anhydride/styrene, and 2 phr of DBTM-MMA-NaMA The PA is PA6 with an intrinsic viscosity being 2.8; the special effect toner is an aluminium powder with a mean particle size being 10 µm; Mw of the PMMA-g-MAH/St is 90,000, a content of MAH being 0.5 wt%; and Mw of the DBTM-MMA-NaMA is 5,000, a content of DBTM being 1 wt%, and a content of NaMA being 9 wt%.

### Example 6

80 phr of PA, 14 phr of special effect toner, 20 phr of polymethyl methacrylate grafted maleic anhydride/styrene, and 1.5 phr of DBTM-MMA-NaMA The PA is PA66 with an intrinsic viscosity being 2.5; the special effect toner is an aluminium powder with a mean particle size being 20 µm; Mw of the PMMA-g-MAH/St is 80,000, a content of MAH being 0.5 wt%; and Mw of the DBTM-MMA-NaMA is 8,000, a content of DBTM being 1.5 wt%, and a content of NaMA being 7 wt%.

### Example 7

85 phr of PA, 18 phr of special effect toner, 15 phr of polymethyl methacrylate grafted maleic anhydride/styrene, and 2 phr of DBTM-MMA-NaMA The PA is PA610 with an intrinsic viscosity being 2.3; the special effect toner is an aluminium powder with a mean particle size being 30 µm; Mw of the PMMA-g-MAH/St is 140,000, a content of MAH being 0.8 wt%; and Mw of the DBTM-MMA-NaMA is 30,000, a content of DBTM being 1.8 wt%, and a content of NaMA being 12 wt%.

### Example 8

90 phr of PA, 8 phr of special effect toner, 10 phr of polymethyl methacrylate grafted maleic anhydride/styrene, and 2 phr of DBTM-MMA-NaMA The PA is 40 wt% of PA46 and 60 wt% of PA12, an intrinsic viscosity of the PA46 being 2.9, and an intrinsic viscosity of the PA12 being 1.9; the special effect toner is an aluminium powder with a mean particle size being 50 µm; Mw of the PMMA-g-MAH/St is 50,000, a content of MAH being 0.3 wt%; and Mw of the DBTM-MMA-NaMA is 20,000, a content of DBTM being 0.8 wt%, and a content of NaMA being 5 wt%.

### Comparative example 1

100 phr of a PA6 body with an intrinsic viscosity being 2.8

### Comparative example 2

100 phr of PA, and 18 phr of special effect toner. The PA is PA6 with an intrinsic viscosity being 2.8; and the special effect toner is an aluminium powder with a mean particle size being 10 µm. The remaining raw materials other than the special effect toner are premixed in a high-speed mixing machine for 3-10 min, then a premix is extruded by means of a double-screw extruder, meanwhile, the special effect toner is pretreated and added into a melt in a side-feed manner according to a proportion, and then same is extruded, wherein an extruder temperature is 190-290°C, a length-diameter ratio of a screw is 40-60, and a rotating speed of the screw is 400-600 r/min.

### Comparative example 3

100 phr of PA, and 0.5 phr of special effect toner The PA is PA6 with an intrinsic viscosity being 2.8; and the special effect toner is an aluminium powder with a mean particle size being 10 µm. The remaining raw materials other than the special effect toner are premixed in a high-speed mixing machine for 3-10 min, then a premix is extruded by means of a double-screw extruder, meanwhile, the special effect toner is pretreated and added into a melt in a side-feed manner according to a proportion, and then same is extruded, wherein an extruder temperature is 190-290°C, a length-diameter ratio of a screw is 40-60, and a rotating speed of the screw is 400-600 r/min.

### Comparative example 4

95 phr of PA, 18 phr of special effect toner, 2 phr of a coupling agent Z-601, 0.2 phr of zinc stearate, 5 phr of a lubricant EBS, 0.2 phr of an antioxidant 168, and 0.1 phr of an antioxidant 1010 The PA is PA6 with an intrinsic viscosity being 2.8; and the special effect toner is an aluminium powder with a mean particle size being 10 µm. Metal toner, the coupling agent and the zinc stearate are mixed in a high-speed mixing machine according to a formula proportion and blended at a rotating speed of 220-260 r/min for 3-5 min, so as to obtain a first mixture. Polyamide, the lubricant and the antioxidant are mixed in the high-speed mixing machine according to a formula proportion and blended at a rotating speed of 320-380 r/min for 2-10 min, so as to obtain a second mixture. The first mixture and the second mixture are added into a double-screw extruder and sequentially pass nine hot zones for melt blending, a rotating speed of the double-screw extruder being set to 400-500 r/min, a first hot zone temperature being set to 210-225°C, a second hot zone temperature being set to 225-235°C, a third hot zone temperature being set to 235-245 °C, a fourth hot zone temperature being set to 240-250°C, a fifth hot zone temperature being set to 240-250°C, a sixth hot zone temperature being set to 245-260°C, a seventh hot zone temperature being set to 245-265°C, an eighth hot zone temperature being set to 250-265°C, a ninth hot zone temperature being set to 250-270°C, and blending being performed for 1-3 min, and extrusion, cooling, drying and cutting into grains are performed after blending, so as to obtain a polyamide resin with a metal effect.

### Comparative example 5

70 phr of PA, 18 phr of special effect toner, and 30 phr of PMMA-g-MAH/St The PA is PA6 with an intrinsic viscosity being 2.8; the special effect toner is an aluminium powder with a mean particle size being 10 µm; and Mw of the PMMA-g-MAH/St is 140,000, a content of MAH being 1 wt%. The PMMA-g-MAH/St is premixed according to a proportion, then same is extruded by means of a double-screw extruder, meanwhile, the special effect toner is added into a melt in a side-feed manner according to a proportion, and same is extruded, so as to obtain a special effect toner master-batch, wherein an extruder temperature is 190-250°C, a length-diameter ratio of a screw is 40-60, and a rotating speed of the screw is 400-600 r/min. Then, the remaining raw materials other than the special effect toner master-batch are premixed in a high-speed mixing machine for 3-10 min, then a premix is extruded by means of the double-screw extruder, meanwhile, the special effect toner is pretreated and added into a melt in a side-feed manner according to a proportion, and same is extruded, wherein the extruder temperature is 190-290°C, the length-diameter ratio of the screw is 40-60, and the rotating speed of the screw is 400-600 r/min.

### Comparative example 6

70 phr of PA, 18 phr of special effect toner, 30 phr of PMMA, and 2 phr of DBTM-MMA-NaMA The PA is PA6 with an intrinsic viscosity being 2.8; the special effect toner is an aluminium powder with a mean particle size being 10 µm; Mw of the PMMA is 140,000; and Mw of the DBTM-MMA-NaMA is 40,000, a content of DBTM being 2 wt%, and a content of NaMA being 15 wt%. The PMMA and an additive are added and premixed according to a proportion, then same is extruded by means of a double-screw extruder, meanwhile, the special effect toner is added into a melt in a side-feed manner according to a proportion, and same is extruded, so as to obtain a special effect toner master-batch, wherein an extruder temperature is 190-250°C, a length-diameter ratio of a screw is 40-60, and a rotating speed of the screw is 400-600 r/min. Then, the remaining raw materials other than the special effect toner master-batch are premixed in a high-speed mixing machine for 3-10 min, then a premix is extruded by means of the double-screw extruder, meanwhile, the special effect toner is pretreated and added into a melt in a side-feed manner according to a proportion, and then same is extruded, wherein the extruder temperature is 190-290°C, the length-diameter ratio of the screw is 40-60, and the rotating speed of the screw is 400-600 r/min.

### Comparative example 7

70 phr of PA, 18 phr of special effect toner, and 30 phr of an acrylonitrile-styrene copolymer AS The PA is PA6 with an intrinsic viscosity being 2.8; the special effect toner is an aluminium powder with a mean particle size being 10 µm; and an AN content of the AS is 24 wt%, a melt index of 220°C*10 kg being 30. All components are weighed according to weights, mixed uniformly by means of a high-speed stirring machine according to a proportion, added from a main feed port of a double-screw extruder, and then subjected to melting, extrusion and granulation by means of the double-screw extruder under process conditions of a temperature of 210-280°C, a vacuum degree of 0.05-0.08 MPA, and a rotating speed of 300-500 r/min.

### Comparative example 8

70 phr of PA, 18 phr of special effect toner, 14 phr of an acrylonitrile-styrene copolymer AS, 7 phr of maleic anhydride grafted acrylonitrile-styrene copolymer AS-MAH, 6 phr of a toughening agent, 2 phr of a dispersing agent, and 2 phr of a processing agent The PA is PA6 with an intrinsic viscosity being 2.8; the special effect toner is an aluminium powder with a mean particle size being 10 µm; an AN content of the AS is 24 wt%, a melt index of 220°C*10 kg being 30; an MAH content of the AS-MAH is 1.2 wt%; the toughening agent is an ethylene-propylene maleic anhydride copolymer; the dispersing agent is a KOH spherical end carboxyl polymer with an acid value of 200-300 mg; and the processing agent is a lubricant EBS. All components are weighed according to weights, mixed uniformly by means of a high-speed stirring machine according to a proportion, added from a main feed port of a double-screw extruder, and then subjected to melting, extrusion and granulation by means of the double-screw extruder under process conditions of a temperature of 210-280°C, a vacuum degree of 0.05-0.08 MPA, and a rotating speed of 300-500 r/min.

### Comparative example 9

70 phr of PA, 2 phr of special effect toner, 14 phr of an acrylonitrile-styrene copolymer AS, 7 phr of maleic anhydride grafted an acrylonitrile-styrene copolymer AS-MAH, 4 phr of a toughening agent, 1 phr of a dispersing agent, and 1 phr of a processing agent The PA is PA6 with an intrinsic viscosity being 2.8; the special effect toner is an aluminium powder with a mean particle size being 10 µm; an AN content of the AS is 24 wt%, a melt index of 220°C*10 kg being 30; an MAH content of the AS-MAH is 1.2 wt%; the toughening agent is an ethylene-propylene maleic anhydride copolymer; the dispersing agent is a KOH spherical end carboxyl polymer with an acid value of 200-300 mg; and the processing agent is a lubricant EBS. All components are weighed according to weights, mixed uniformly by means of a high-speed stirring machine according to a proportion, added from a main feed port of a double-screw extruder, and then subjected to melting, extrusion and granulation by means of the double-screw extruder under process conditions of a temperature of 210-280°C, a vacuum degree of 0.05-0.08 MPA, and a rotating speed of 300-500 r/min.

### Comparative example 10

95 phr of PA6 are used, and a polyamide resin is a copolymer composed of a 6-aminocaproic acid unit and a 11- aminoundecanoic acid unit, a content of the 6-aminocaproic acid unit in the polyamide resin being 60-90 wt%. 90 wt% of the 6-aminocaproic acid unit and 10 wt% of the 11-aminoundecanoic acid unit are subjected to a polymerization reaction in the presence of swelling phyllosilicate (MaSi(Al₂-0.5Mg)O₁₀(OH)₂·nH₂O), , and an obtained mixture of the polymer and the swelling phyllosilicate (B) as well as a metallic pigment (C) are melted and mixed, so as to manufacture the polyamide resin composition. By means of a method for polymerizing aminopolycarboxylic acid (lactam) in the presence of the swelling phyllosilicate (B), the swelling phyllosilicate (B) and the aminopolycarboxylic acid (lactam) are put into an autoclave, then water or the like is used as an initiator, and melt polycondensation is performed at a temperature of 240-300°C and pressure of 0.2-3 MPa for 1-15 h. In addition, in order to remove the aminopolycarboxylic acid (lactam) remaining in the polyamide resin after polymerization, and preferably, granules of the polyamide resin are subjected to refinement by utilizing hot water under the condition that the granules may be treated in the hot water at 90-100°C for 8 h or longer. An intrinsic viscosity of obtained polyamide is 2.5.

100 phr of the polyamide resin (A) and 8 phr of the swelling phyllosilicate (B) are mixed and then extruded through an extruder from upstream, and 3 phr of the metallic pigment aluminum (C) is fed as the metallic pigment (C) through a side feeder and preferably fed downstream of the extruder. A content of an aluminum powder is 3 wt% of the polyamide (A) copolymer, an aspect ratio of the aluminum powder is 20, and a mean particle size of the aluminum powder is 20 µm. An extruder temperature is set to 190-250°C.

Property tests of examples 1-5 and comparative examples 1-10 are as follows:

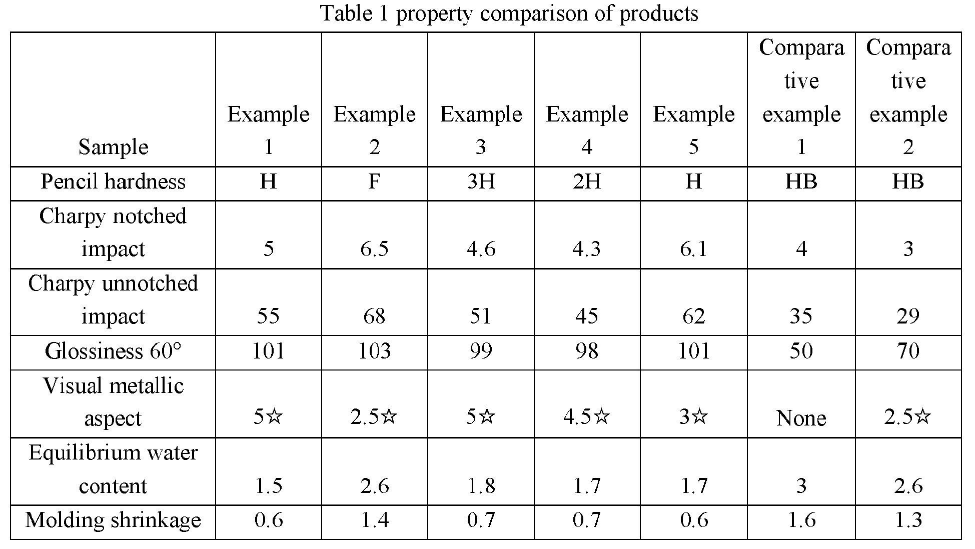

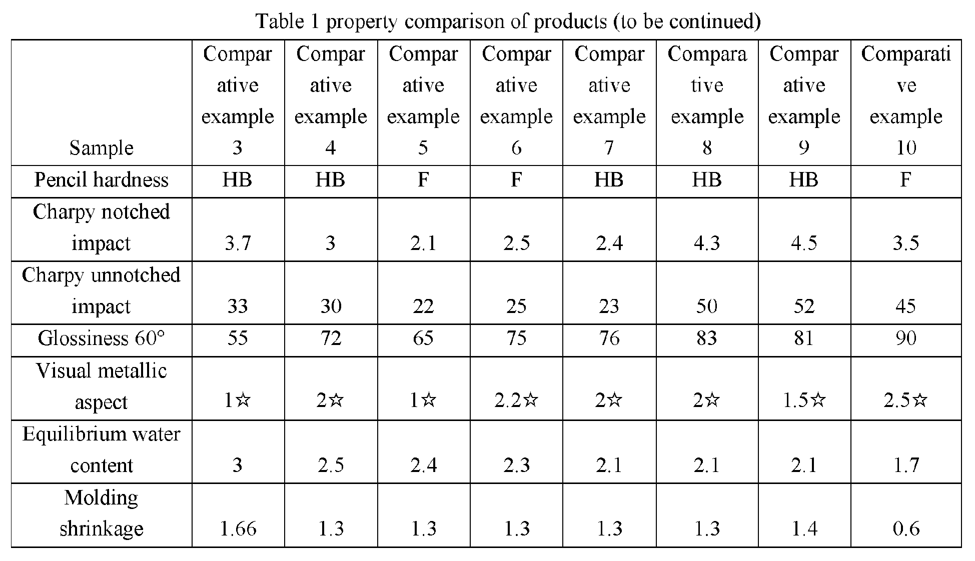

A physical property test method:
a pencil hardness test: a highlight color board with a thickness of 3 mm is formed by prepared granules at a temperature of 250°C through injection molding, and the hardness test is performed. The pencil hardness test is performed according to GB/T 6739-1996, weights having a weight of 500 g.

An impact property: the impact property is tested according to ISO 179, a unit being kJ/m².

Glossiness: the glossiness is tested according to ISO2813.

A visual metallic aspect: with reference to appearance of metal elemental aluminium, the more similar to the appearance of a reference object, the more ☆ will be obtained, and the higher the metallic aspect is.

An equilibrium water content: a weight increase of the sample is measured at a temperature of 23°C and HR of 50%.

A molding shrinkage: the molding shrinkage is tested after the sample is kept at 23°C for 24 h according to GB/T 17037.4-2003.

From comparison of results in Table 1, advantages of the present invention are obvious. From comparison between example 1 and comparative example 2 and comparison between example 2 and comparative example 3, it is clear that blended PMMA-g-MAH/St may improve water absorption, the molding shrinkage, impact toughness and scratch resistance of the PA, and meanwhile, may obviously enhance the metallic aspect and the glossiness of the material. The additive DBTM-MMA-NaMA has very good compatibility with a copolymer of the special effect toner and the PMMA-g-MAH/St, and is adsorbed onto a surface of the toner to assist the special effect toner to be uniformly dispersed in the PMMA-g-MAH/St, so as to avoid mutual stacking of the special effect toner. Active functional groups of the PMMA-g-MAH/St and the DBTM-MMA-NaMA are in mutual cooperation to assist the PMMA-g-MAH/St to be dispersed, control forms of two phases, accelerate crystallization, and refine crystal grains, so as to improve toughness, rigidity and a special effect implementation condition of the material. From comparison between example 1 and comparative example 4, it is clear that the present invention, compared with a general dispersing agent, may greatly improve the metallic aspect, the toughness and other properties of the material. From the results of example 1 and comparative examples 5/6/7, it is clear that the active functional groups of the PMMA-g-MAH/St and the DBTM-MMA-NaMA are in mutual cooperation to assist the PMMA-g-MAH/St to be dispersed and control forms of two phases, so as to obviously improve properties of the material. From comparison between example 1 and comparative examples 8/9, it is shown that a technology used by the present invention greatly improves the metallic aspect of the material. From the results of example 5 and comparative example 10, it is clear that compared with an in-situ polymerized nano material, gloss and the toughness of the material blended with the special effect toner are improved in some degree, and meanwhile, the technology of the present invention is simpler and more convenient. Compared with other technologies, the present invention better solves a problem that in the prior art, a metallic aspect is low and a toughness is poor when a nylon material with a metal effect is prepared.

The particular examples of the present invention are described as above. It may be understood that the present invention is not limited to the above particular examples, and various changes or modifications may be made by those skilled in the art within the scope of claims, which does not influence the substantial content of the present invention.

## Claims

1. A polyamide resin composition with a high metallic aspect, consisting of the following components, in parts by weight:
| | |
|---|---|
| a polyamide resin: | 70-95 parts; |
| an auxiliary: | 0-5 parts; and |
| a special effect master-batch: | 5.6-50 parts; |
the special effect master-batch being composed of the following components:
| | |
|---|---|
| polymethyl methacrylate grafted maleic anhydride/styrene: | 5-30 parts; |
| special effect toner: | 0.5-18 parts; and |
| dibutyltin maleate-methyl methacrylate-sodium methacrylate copolymer: | 0.1-2 parts |
wherein the auxiliary is selected from at least one of a heat stabilizer, an antioxidant, a weather resistance agent, a lubricant, a release agent, an anti-electrification agent and an inorganic filler and
the special effect toner is selected from one or more of a bismuth oxychloride crystal metallic pigment, a mica coating metallic pigment, a silicon dioxide coating metallic pigment, an aluminium borate coating metallic pigment, an artificial mica coating metallic pigment, an aluminium oxide coating metallic pigment, a bismuth oxide coating metallic pigment, an aluminium powder, a copper powder, an iron powder, a zinc powder and a copper-zinc powder.

2. The polyamide resin composition according to claim 1, wherein the polyamide comprises at least one of PA6, PA66, PA46, PA610, PA68, PAMXD6, PA10, PA12, PA11, PA6T, PA10T, PA1010, PA1212, and PA9T.

3. A method for preparing the polyamide resin composition according to claim 1, comprising the following steps:
premixing polymethyl methacrylate grafted maleic anhydride/styrene and dibutyltin maleate-methyl methacrylate-sodium methacrylate copolymer , and then extruding same by means of a double-screw extruder, so as to obtain a melt, adding special effect toner into the melt and extruding same, so as to obtain a special effect toner master-batch, wherein an extruder temperature is 190-250°C, a length-diameter ratio of a screw is 40-60, and a rotating speed of the screw is 400-600 r/min; and
premixing a polyamide resin and an auxiliary in a high-speed mixing machine for 3-10 min, extruding same by means of the double-screw extruder, so as to obtain a melt, meanwhile, adding the special effect master-batch into the melt in a side-feed manner, and extruding same, wherein the extruder temperature is 190-290°C, the length-diameter ratio of the screw is 40-60, and the rotating speed of the screw is 400-600 r/min.

## Patentansprüche

1. Polyamidkunststoffzusammensetzung mit hohem metallischem Aspekt, bestehend aus den folgenden Bestandteilen nach Gewicht:
einem Polyamidkunststoff: 70-95 Gewichtsanteile;
einem Hilfsstoff: 0-5 Gewichtsanteile; und
einer Spezialeffekthauptcharge: 5,6-50 Gewichtsanteile;
wobei die Spezialeffekthauptcharge aus den folgenden Bestandteilen zusammengesetzt ist:
mit Polymethylmethacrylat aufpolymerisiertem Maleinsäureanhydrid/Styrol: 5-30 Gewichtsanteile;
Spezialeffektttoner: 0,5-18 Gewichtsanteile; und
Dibutylzinnmaleat-Methylmethacrylat-Natriummethacrylat-Copolymer: 0,1-2 Gewichtsanteile
wobei der Hilfsstoff ausgewählt ist aus wenigstens einem von einem Wärmestabilisator, einem Antioxidationsmittel, einem Wetterfestigkeitsmittel, einem Schmiermittel, einem Trennmittel, einem Anti-Elektrifizierungsmittel und einem anorganischen Füllstoff und
der Spezialeffekttoner ausgewählt ist aus ein oder mehreren von einem Bismutoxychloridkristall-Metallpigment, einem Glimmerbeschichtung-Metallpigment, einem Siliziumdioxidbeschichtung-Metallpigment, einem Aluminiumboratbeschichtung-Metallpigment, einem künstlichen Glimmerbeschichtung-Metallpigment, einem Aluminiumoxidbeschichtung-Metallpigment, einem Bismutoxidbeschichtung-Metallpigment, einem Aluminiumpulver, einem Kupferpulver, einem Eisenpulver und einem Kupfer-Zink-Pulver.

2. Polyamidkunststoffzusammensetzung nach Anspruch 1, wobei das Polyamid wenigstens eins von PA6, PA66, PA46, PA610, PA68, PAMXD6, PA10, PA12, PA11, PA6T, PA10T, PA1010, PA1212 und PA9T umfasst.

3. Verfahren zum Herstellen der Polyamidkunststoffzusammensetzung nach Anspruch 1, folgende Schritte umfassend:
Vormischen des mit Polymethylmethacrylat aufpolymerisiertem Maleinsäureanhydrid/Styrols und des Dibutylzinnmaleat-Methylmethacrylat-Natriummethacrylat-Copolymers, und dann Extrudieren desselben mittels eines Doppelschneckenextruders, um eine Schmelze zu erlangen, Zusetzen des Spezialeffektttoners zu der Schmelze und Extrudieren derselben, um eine Spezialeffektttonerhauptcharge zu erlangen, wobei eine Extrudertemperatur 190-250 °C beträgt, ein Länge-Durchmesser-Verhältnis einer Schnecke 40-60 beträgt und eine Drehzahl der Schnecke 400-600 U/min beträgt; und
Vormischen eines Polyamidkunststoffs und eines Hilfsstoffs in einer Hochgeschwindigkeitsmischmaschine für 3-10 min, Extrudieren desselben mittels eines Doppelschneckenextruders, um eine Schmelze zu erlangen, währenddessen Zusetzen der Spezialeffekttonerhauptcharge in die Schmelze per Seitenbeschickung und Extrudieren derselben, wobei die Extrudertemperatur 190-290 °C beträgt, ein Länge-Durchmesser-Verhältnis der Schnecke 40-60 beträgt und eine Drehzahl der Schnecke 400-600 U/min beträgt.

## Revendications

1. Une composition de résine polyamide à apparence métallique élevée, comprenant les composants suivants, en parties en poids :
une résine polyamide : 70-95 parties ;
un auxiliaire : 0-5 parties ; et
un maître-lot à effets spéciaux : 5,6-50 parties ;
le maître-lot à effets spéciaux étant composé des composants suivants :
méthacrylate de polyméthyle greffé avec anhydride maléique/styrène : 5-30 parties ;
toner à effets spéciaux : 0,5-18 parties ; et
copolymère de maléate de dibutylétain-méthacrylate de méthyle-méthacrylate de sodium : 0,1-2 parties
dans lequel l'auxiliaire est sélectionné parmi au moins un stabilisateur thermique, un antioxydant, un agent de résistance aux conditions climatiques, un lubrifiant, un agent de démoulage, un agent anti-électrification et une charge inorganique et
le toner à effets spéciaux est sélectionné parmi un ou plusieurs éléments suivants : un pigment métallique de cristaux de chlorure oxygéné de bismuth, un pigment métallique de revêtement de mica, un pigment métallique de revêtement de dioxyde de silicium, un pigment métallique de revêtement de borate d'aluminium, un pigment métallique de revêtement de mica artificiel, un pigment métallique de revêtement d'oxyde d'aluminium, un pigment métallique de revêtement d'oxyde de bismuth, une poudre d'aluminium, une poudre de cuivre, une poudre de fer, une poudre de zinc et une poudre de cuivre-zinc.

2. Une composition de résine polyamide selon la revendication 1, dans laquelle le polyamide comprend au moins un élément parmi PA6, PA66, PA46, PA610, PA68, PAMXD6, PA10, PA12, PA11, PA6T, PA10T, PA1010, PA1212, et PA9T.

3. Un procédé de préparation de la composition de résine polyamide selon la revendication 1, comprenant les étapes suivantes:
pré-mélanger le méthacrylate de polyméthyle greffé avec anhydride maléique/styrène et le copolymère de maléate de dibutylétain-méthacrylate de méthyle-méthacrylate de sodium, puis extruder les mêmes par moyen d'extrudeuse à double-vis, afin d'obtenir une masse fondue, ajouter le toner à effets spéciaux dans la masse fondue et extruder, afin d'obtenir un maître-lot de toner à effets spéciaux, dans lequel la température de l'extrudeuse est de 190-250°C, le rapport longueur-diamètre de la vis est de 40-60, et la vitesse de rotation de la vis est de 400-600 t/min ; et
pré-mélanger la résine de polyamide et l'auxiliaire dans une machine de mélange à grande vitesse pendant 3-10 min, extruder les mêmes par moyen d'extrudeuse à double-vis, afin d'obtenir une masse fondue, pendant le même temps, ajouter le maître-lot de toner à effets spéciaux dans la masse fondue par alimentation latérale, et extruder les mêmes, dans lequel la température de l'extrudeuse est de 190-290°C, le rapport longueur-diamètre de la vis est de 40-60, et la vitesse de rotation de la vis est de 400-600 t/min.
